# EUROPÄISCHE PATENTANMELDUNG

(11) **EP 3 338 880 A1**
(43) Veröffentlichungstag der Anmeldung: **27.06.2018**
(21) Anmeldenummer: 16206644.3
(22) Anmeldetag: 23.12.2016
(51) Int. Cl.: B01D 63/12, B66C 1/54

(54) **VERFAHREN UND WERKZEUG ZUR DEMONTAGE EINES FILTERELEMENTS AUS EINER ROHRLEITUNG**

(71) Anmelder: Gedore-Werkzeugfabrik GmbH & Co. KG, 42899 Remscheid (DE)
(72) Erfinder: Münster, Florian, 40217 Düsseldorf (DE); Knak, Volker, 45259 Essen (DE)
(74) Vertreter: Rausch Wanischeck-Bergmann Brinkmann

(57) **Zusammenfassung**

Die Erfindung betrifft ein Verfahren zur Demontage eines Filterelements aus einer Rohrleitung, wobei das Filterelement eine im Wesentlichen zentrische Öffnung und eine Außenkontur hat, die im Wesentlichen mit einer Innenkontur der Rohrleitung übereinstimmt, bei dem ein Werkzeug in die in Längsachsenrichtung des Filterelements verlaufende, im Wesentlichen zentrische Öffnung des Filterelements eingeschoben wird, das Werkzeug anschließend in zumindest einem Teilbereich seiner Umfangsfläche in einer Erstreckung im Wesentlichen rechtwinklig zur Längsachsenrichtung des Filterelements vergrößert und kraft- und/oder formschlüssig mit einer Innenmantelfläche der im Wesentlichen zentrischen Öffnung des Filterelements verbunden wird und bei dem das Filterelement abschließend mit dem Werkzeug in Längsachsenrichtung verschoben wird, bis das Filterelement aus der Rohrleitung hervorsteht und aus der Rohrleitung entnommen wird.

## Beschreibung

Die Erfindung betrifft ein Verfahren zur Demontage eines Filterelements aus einer Rohrleitung, wobei das Filterelement eine im Wesentlichen zentrische Öffnung und eine Außenkontur hat, die im Wesentlichen mit einer Innenkontur der Rohrleitung übereinstimmt, bei dem ein Werkzeug in die in Längsachsenrichtung des Filterelements verlaufende, im Wesentlichen zentrische Öffnung des Filterelements eingeschoben wird. Desweiteren betrifft die Erfindung ein Werkzeug zur Demontage eines Filterelements aus einer Rohrleitung, wobei das Filterelement eine insbesondere zentrische Öffnung und eine Außenkontur aufweist, die im Wesentlichen mit einer Innenkontur der Rohrleitung übereinstimmt.

Beispielsweise bei der Umkehrosmose oder Reversosmose wird ein Medium, in dem die Konzentration eines bestimmten Stoffes verringert werden soll, durch eine halbdurchlässige (semi permeable) Membran von dem Medium getrennt, indem die Konzentration erhöht werden soll. Dieses wird einem Druck ausgesetzt, der höher sein muss als der Druck, der durch das osmotische Verlangen zum Konzentrationsausgleich entsteht. Derartige Vorgehensweisen werden beispielsweise bei der Trinkwasseraufbereitung oder bei der Brauchwasseraufbereitung aber auch im militärischen Bereich sowie bei der Raumfahrt eingesetzt. Gleiches gilt hinsichtlich der Meerwasserentsalzung. Hierzu werden auch großtechnische Anlagen verwendet, die aus einer Vielzahl von Rohrleitungen bestehen, in denen einzelne Filterelemente eingesetzt sind, die von Zeit zu Zeit ausgetauscht werden müssen. Eine hierbei verwendete Rohrleitung ist hohlzylindrisch ausgebildet und mit einer Vielzahl von in Reihe angeordneten Filterelementen besetzt, deren Außendurchmesser mit dem Innendurchmesser der Rohrleitung im Wesentlichen übereinstimmen. Die Filterelemente bestehen aus einem Filterstoff, der gewickelt angeordnet ist und einen zylindrischen Filterkörper ausbildet. Die Filterelemente weisen stirnseitig zwei Halteelemente auf, die formstabil ausgebildet sind. Die Halteelemente sind mit einem Außenring ausgebildet, der über Radialstege mit einem Innenring, eine zentrische Öffnung vorgebend verbunden ist. Der Außenring hat einen Außendurchmesser, der im Wesentlichen mit dem Innendurchmesser der Rohrleitung übereinstimmt.

Über den Filterkörper wird die Osmose durchgeführt, indem das zu reinigende Medium, insbesondere Wasser durch die semi permeablen Membran des Filterkörpers gedrückt wird. Diese Membranen arbeiten entsprechend mikroskopischer Siebe und ermöglichen es ausschließlich den Molekülen des Mediums durch die Membran zu diffundieren, wobei weitere Bestandteile, wie beispielsweise Salz, Mineralien oder andere Verunreinigungen, wie beispielsweise Bakterien und Viren an einem Durchtritt durch die Membran gehindert sind. Diese Verunreinigungen im Medium werden sodann ausgeschieden. Dies kann dadurch erfolgen, dass das Medium mit den Verunreinigungen über die Außenfläche der Filterelemente in den Zentralbereich der Filterelemente geführt wird, wodurch über die zentrale Öffnung das gereinigte Medium, beispielsweise Wasser ausgeleitet wird. Die Verunreinigungen verbleiben dann im Filtermaterial des Filterelements, so dass ein regelmäßiger Austausch der Filterelemente nach Sättigung des Filtermaterials erforderlich ist.

Dieser Austausch gestaltet sich insbesondere hinsichtlich der Demontage der Filterelemente bei langen Rohrleitungen umständlich. Da die Filterelemente einen Außendurchmesser aufweisen, der mit dem Innendurchmesser der Rohrleitung im Wesentlichen übereinstimmt, kommt es zu großen Reibkräften zwischen der Außenmantelfläche der Filterelemente und der Innenmantelfläche der Rohrleitungen bereits beim Einbau der Filterelemente. Dies wird sodann bei der Demontage noch dadurch erhöht, dass beispielsweise das Filtermaterial aufquillt oder kleine Spalträume zwischen den Halteelementen und der Innenmantelfläche der Rohrleitung durch Verschmutzungen verschlossen werden, so dass die Filterelemente mitunter mit der Innenmantelfläche der Rohrleitung verklebt sind.

Desweiteren ist es problematisch, die Filterelemente zu demontieren, die in einer langen Rohrleitung mittig angeordnet sind, da deren Erreichbarkeit nicht ohne ein Werkzeug gegeben ist. Die Demontage dieser Filterelemente erfolgt demzufolge im Stand der Technik dadurch, dass eine mit der Demontage beauftragte Person ein Werkzeug, beispielsweise einen Metallstab mit einer abgebogenen Spitze in die zentrische Öffnung des Filterelements einfädelt und dieses Filterelement sodann mittels der Stange aus der Rohrleitung herauszieht. Hierbei werden regelmäßig die stirnseitigen Halteelemente der Filterelemente beschädigt oder zerstört, so dass die Filterelemente anschließend nicht mehr verwendbar sind. Dies ist bei den hochpreisigen Filterelementen bedeutsam und erhöhen die Betriebskosten einer entsprechenden Osmoseanlage nachhaltig.

Auch ein Herausschieben der Filterelemente ist nicht ohne Weiteres möglich.

Insbesondere die hohe Reibung zwischen den Filterelementen und der Innenwandung der Rohrleitung bedürfen einer hohen Schubkraft, die aber dann auch zu einer Beschädigung der Filterelemente durch Stauchung führen kann.

Die voranstehenden Ausführungen zu den exemplarisch beschriebenen Osmoseanlagen sind nicht abschließend. Vielmehr bestehen die voranstehend beschriebenen Probleme auch bei anderen Anlagen, bei denen Filterelemente in Reihe in Rohrleitungen angeordnet sind. Auch die Demontage einzelner Filterelemente aus einer Rohrleitung ist gegebenenfalls aufgrund der voranstehenden Problematik umständlich.

Ausgehend von diesem Stand der Technik ist es eine Aufgabe der Erfindung, ein Verfahren und ein Werkzeug zur Demontage eines Filterelements aus einer Rohrleitung bereitzustellen, mit dem die Demontage des Filterelements in einfacher und insbesondere für das Filterelement und die Rohrleitung schonender Weise ausgeführt werden kann, wobei in erster Linie eine Beschädigung oder Zerstörung des Filterelements vermieden werden soll.

Seitens des erfindungsgemäßen Verfahrens ist zur Lösung dieser Aufgabenstellung vorgesehen, dass ein Werkzeug in die in Längsachsenrichtung des Filterelements verlaufende, im Wesentlichen zentrische Öffnung des Filterelements eingeschoben wird, das Werkzeug anschließend in zumindest einem Teilbereich seiner Umfangsfläche in einer Erstreckung im Wesentlichen rechtwinklig zur Längsachsenrichtung des Filterelements vergrößert und kraft- und/oder formschlüssig mit einer Innenmantelfläche der im Wesentlichen zentrischen Öffnung des Filterelements verbunden wird und dass das Filterelement anschließend mit dem Werkzeug in Längsachsenrichtung verschoben wird, bis das Filterelement aus der Rohrleitung hervorsteht und aus der Rohrleitung entnommen wird.

Es ist somit vorgesehen, dass bei dem erfindungsgemäßen Verfahren in einem ersten Schritt ein Werkzeug in die zentrischen Öffnung des Filterelements eingeschoben wird, welches anschließend hinsichtlich seiner Umfangsfläche zumindest in einem Teilbereich vergrößert wird. Hierdurch wird die Umfangsfläche kraft- und/oder formschlüssig mit einer Innenmantelfläche der zentrischen Öffnung des Filterelements in Kontakt gebraucht beziehungsweise verbunden. Sodann kann über das Werkzeug eine ausreichend große Reibkraft beziehungsweise bei einer formschlüssigen Verbindung auch eine entsprechend große Zugkraft auf das Filterelement übertragen werden, indem das Werkzeug zusammen mit dem Filterelement in Längsachsenrichtung der Rohrleitung beziehungsweise des Filterelements verschoben wird. Ein Verschieben kann hier sowohl im Sinne eines Herausziehens oder eines Durchschiebens des Filterelements vorgesehen sein. Sobald nun das Filterelement aus der Rohrleitung hervorsteht, das heißt beispielsweise manuell ergriffen werden kann, wird das Filterelement aus der Rohrleitung entnommen. Selbstverständlich besteht hier auch die Möglichkeit, dass das Filterelement mit dem Werkzeug vollständig aus der Rohrleitung herausgezogen wird, so dass ein manueller Kontakt mit dem Filterelement vermieden werden kann.

Hierbei ist auszuführen, dass das erfindungsgemäße Verfahren nicht auf eine runde Querschnittsgestaltung der Rohrleitung beziehungsweise des Filterelements beschränkt ist. Es ist selbstverständlich auch bei Filterelemente handhabbar, die eine von der zylindrischen Formgebung abweichende Formgebung aufweisen und auch in einer entsprechend abweichend ausgebildeten Rohrleitung angeordnet sind, wenngleich natürlich entsprechende Anlagen sowohl hohlzylindrische Rohrleitungen, als auch zylindrisch ausgebildete Filterelemente verwenden.

Unter dem Begriff "kraftschlüssig" ist hier ein Reibschluss zu verstehen, das heißt, dass das Werkzeug mit seiner Umfangsfläche derart mit der Innenmantelfläche der zentrischen Öffnung des Filterelements in Kontakt gebracht wird, dass die Reibkraft zwischen dem Werkzeug und dem Filterelement ausreicht, um die über das Werkzeug auf das Filterelement übertragene Zug- oder Druckkraft zu übertragen, so dass das Filterelement entgegen der Reibkraft zwischen dem Filterelement und der Innenmantelfläche der Rohrleitung herausgezogen werden kann. Unter dem Begriff "formschlüssig" ist in diesem Fall zu verstehen, dass das Werkzeug zumindest teilweise in das Filterelement eingreift und damit eine Kraftübertragung aufgrund der Formgebung des in das Filterelement eingreifenden Teils des Werkzeugs ermöglicht. Beispielsweise können hierzu Hakenelemente vorgesehen sein, die in den Filterkörper eindringen.

Nach einer Weiterbildung des erfindungsgemäßen Verfahrens ist vorgesehen, dass das Werkzeug über zumindest zwei Spannelemente mit der Innenmantelfläche des Filterelements verbunden wird, wobei die Spannelemente mechanisch, hydraulisch und/oder pneumatisch aus einer ersten Stellung in eine zweite, die Erstreckung des Werkzeugs rechtwinklig zur Längsachsenrichtung des Filterelements vergrößernden Stellung überführt werden. Bei dieser Weiterbildung des Verfahrens ist somit vorgesehen, dass die zumindest zwei Spannelemente, hierbei kann es sich beispielsweise um Spannbacken handeln, aus der Oberfläche des Werkzeugs ausgeschoben und in Kontakt mit der Innenmantelfläche der zentrischen Öffnung des Filterelements gebracht werden. Die Verschiebung der Spannelemente erfolgt beispielsweise mechanisch, insbesondere über einen Spindelantrieb, der nachfolgend noch beschrieben werden wird. Es besteht aber auch die Möglichkeit, dass die Spannelemente hydraulisch, das heißt mit einem Fluid oder pneumatisch aus einer ersten Stellung in eine zweite Stellung überführt werden, in der die Spannelemente aus der Oberfläche des Werkzeugs ausgefahren sind, um eine vergrößerte Erstreckung des Werkzeugs zu erzielen und somit die erforderlichen Reibkräfte auf das Filterelement übertragen zu können. Diese Ausgestaltung hat den Vorteil, dass die Einführung des Werkzeugs in das Filterelement vereinfacht und die Vergrößerung der Erstreckung des Werkzeugs im Wesentlichen rechtwinklig zur Längsachsenrichtung des Filterelements auch in einer Position durchgeführt werden kann, bei der ein Filterelement demontiert werden soll, welches im Mittelbereich einer langen Rohrleitung angeordnet und damit händisch nicht zugänglich ist. Es sind auch Lösungen möglich, bei denen die Spannelemente sowohl mechanisch, als auch hydraulisch oder pneumatisch bewegt werden. Beispielsweise kann ein hydraulischer oder pneumatischer Antrieb für ein mechanisches Spindelwerk vorgesehen sein.

Gemäß einer Weiterbildung des erfindungsgemäßen Verfahrens ist vorgesehen, dass Spannelemente mit ersten Enden schwenkbar an einem Grundkörper des Werkzeugs angelenkt sind und dass zweite Enden der Spannelement vom Grundkörper wegbewegt werden. Bevorzugt ist eine Ausbildung des erfindungsgemäßen Verfahrens, bei dem die Spannelemente über die Verkürzung des Grundkörpers des Werkzeugs bewegt werden. Hierbei kann sowohl die voranstehend beschriebene Ausführungsform vorgesehen sein, als auch eine solche, bei der die Spannelemente im Bereich ihrer beiden Enden über Schrägflächen im Grundkörper des Werkzeugs in Richtung auf die Innenmantelfläche des Filterelements verschoben werden.

Schließlich ist nach einem weiteren Merkmal der Erfindung hinsichtlich des erfindungsgemäßen Verfahrens vorgesehen, dass die Vergrößerung der Erstreckung des Werkzeugs im Wesentlichen rechtwinklig zur Längsachsenrichtung des Filterelements gegen ein Federelement des Werkzeugs ausgeführt wird. Diese Vorgehensweise hat den Vorteil, dass die Spannelemente nach Demontage des Filterelements aus der Rohrleitung in einfacher Weise in die erste Stellung überführt werden, so dass das Werkzeug schnell und risikofrei, das heißt ohne Gefahr der Beschädigung des Filterelements aus diesem herausgezogen werden kann. Als Federelemente kommen hier insbesondere Gummiringe in Frage, die den Grundkörper des Werkzeugs im Bereich der Spannelemente umgeben und bei einer Überführung der Spannelemente aus der ersten Stellung in die zweite Stellung gespannt werden, so dass die dabei aufgebaute Federkraft bei der Rückführung der Spannelemente aus der zweiten in die erste Stellung genutzt werden.

Zur Lösung der erfindungsgemäßen Aufgabenstellung ist bei einem Werkzeug vorgesehen, dass dieses aus einem Grundkörper, zumindest einem Spannelement und einer Steuereinrichtung ausgebildet ist, wobei das Spannelement im Grundkörper relativ zu diesem bewegbar angeordnet und zwischen zwei Stellungen verstellbar ist, wobei das Spannelement zumindest in der zweiten Stellung die Erstreckung des Grundkörpers rechtwinklig zu seiner Längsachse vergrößert und über die Steuereinrichtung die Verstellung des Spannelements in die zweite Stellung erfolgt.

Das erfindungsgemäße Werkzeug weist somit einen Grundkörper auf, an dem ein relativ hierzu bewegbares Spannelement angeordnet ist. Das Spannelement kann zwischen zwei Stellungen verstellt werden, wobei das Spannelement zumindest in der zweiten Stellung die Erstreckung des Grundkörpers rechtwinklig zu seiner Längsachse vergrößert und somit die Möglichkeit bereitstellt, die erforderliche Reibkraft zwischen dem Werkzeug und der Innenmantelfläche der zentrischen Öffnung des Filterelements zu erhöhen. Zur Bewegung des Spannelements relativ zum Grundkörper ist die Steuereinrichtung vorgesehen, mit der das Spannelement aus der ersten Stellung in die zweite Stellung überführbar ist.

Das erfindungsgemäße Werkzeug wird dadurch weitergebildet, dass der Grundkörper eine Spindel und zumindest zwei in Axialrichtung der Spindel relativ zueinander bewegbare Schubelemente als Steuereinrichtung und zumindest ein zwischen den Schubelementen angeordnetes Spannelement aufweist, welches bei einer Bewegung der Schubelemente aufeinander zu radial nach außen des Grundkörpers verdrängt wird. Bei dieser Ausgestaltung wird der Grundkörper in seiner axialen Länge verkürzt, wobei zwei relativ zueinander bewegbare Schubelemente auf einer Spindel angeordnet sind. Die Schubelemente dienen als Steuereinrichtung und wirken mit dem Spannelement zusammen, welches durch die Bewegung der Schubelemente aufeinander zu nach außen und damit in Anlage mit der Innenmantelfläche der zentrischen Öffnung des Filterelements verdrängt wird. Anstelle einer Spindel kann hier selbstverständlich auch ein hydraulisches oder pneumatisches System verwendet werden, bei dem vorgesehen ist, dass die Schubelemente durch ein Fluid oder durch Luftdruck aufeinander zubewegt werden.

Nach einem weiteren Merkmal der Erfindung ist vorgesehen, dass das Spannelement aus zwei diametral gegenüberliegend am Grundkörper angeordneten Spannbacken oder drei oder vier Spannbacken besteht, die in gleichmäßigen Abständen über den Umfang zueinander am Grundkörper angeordnet sind. Durch diese Ausgestaltung wird eine gleichmäßige Druckbelastung der Innenmantelfläche der im Wesentlichen zentrischen Öffnung des Filterelements gewährleistet, so dass zum Einen eine zu starke Druckbelastung in einem bestimmten Flächenbereich unterbleibt und dass zum Anderen das Werkzeug in der zentrischen Anordnung innerhalb der Öffnung des Filterelements verbleibt.

Eine weitere Verbesserung des Werkzeugs hinsichtlich der Reibkraftübertragung auf die Innenmantelfläche des Filterelements beziehungsweise hinsichtlich der Verwendbarkeit des Werkzeuges bei längeren Filterelementen wird dadurch erzielt, dass zwei oder mehr Spannelemente in Axialrichtung des Grundkörpers hintereinander angeordnet sind und gemeinsam und gleichgerichtet über die Steuereinrichtung verstellbar sind. Hierdurch wird sichergestellt, dass mehrere Spannelemente gleichmäßig mit der Innenmantelfläche der Öffnung des Filterelements in Kontakt treten und größere Flächen für die Reibkraftübertragung zur Verfügung stehen.

Vorzugsweise sind bei dem erfindungsgemäßen Werkzeug die Spannelemente über federelastische Halteelemente an dem Grundkörper befestigt. Hierbei kann es sich beispielsweise um federelastische Ringe handeln, die das Werkzeug im Bereich der Spannelemente umgeben und bei einer Verstellung der Spannelemente aus der ersten, eingezogenen Stellung in die zweite, ausgeschobene Stellung gespannt werden, so dass die damit erzielte Federkraft anschließend für die Rückführung der Spannelemente aus der zweiten in die erste Stellung genutzt werden kann. Dies stellt sicher, dass die Spannelemente auch bei entsprechender Rückdrehung der Spindel in die entsprechenden Aufnahmen des Grundkörpers überführt werden, so dass das Werkzeug anschließend ohne die Gefahr der Beschädigung des Filterelements im Bereich der Innenmantelfläche der Öffnung des Filterelements aus dem Filterelement herausgezogen werden kann. Ein Verhaken der Spannelemente im Filterelement wird hierdurch vermieden.

Neben einem Keilprinzip, wie voranstehend beschrieben, kann die Verbindung zwischen dem Werkzeug und der Innenmantelfläche des Filterelements auch beispielsweise durch Schalenelemente vorgesehen sein, die im Bereich eines zentralen Rohres angeordnet und über einen Druck innerhalb des Rohres radial über die Außenmantelfläche des zentralen Rohres ausgeschoben werden, sodass die Schalenelemente in Kontakt mit der Innenmantelfläche des Filteretementes treten und dort reibschlüssig anliegen. Ergänzend können die Schalenelemente auf ihrer der Innenmantelfläche des Filterelements zugewandten Oberfläche Vorsprünge aufweisen, die beim Ausschieben des Elemente formschlüssig in die Innenmantelfläche des Filterelements eingreifen. Eine weitere Ausführungsform kann vorsehen, dass eine mit einem Liquid, beispielsweise Luft, Gas oder einer Flüssigkeit füllbare elastische Membran in das Filterelement eingeschoben wird. Anschließend wird die Membran mit dem Liquid befüflt, sodass sich das Volumen der Membran vergrößert und sich die Membran mit ihrer Außenfläche an die Innenmantelfläche des Filterelements anlegt. Durch eine Druckerhöhung wird eine reibschlüssige Verbindung geschaffen. Hierbei kann die Membran beispielsweise auch mit einer Reibung erhöhenden Oberfläche ausgebildet sein. Eine weitere Ausgestaltung kann dadurch gegeben sein, dass zumindest zwei stabförmige Elemente aus einem elastischen Material, beispielsweise einem Schaumstoff an einem zentralen Träger angeordnet sind. Der zentrale Träger mit den Elementen wird in das Filterelement eingeschoben und anschließend die Elemente von dem Träger weg in Richtung auf die Innenmantelfläche des Filterelements bewegt, sodass diese Elemente in Anlage mit der Innenmantelfläche des Filterelements gelangen. Auch hier kann ein hoher Reibschluss vorgesehen sein. Die Bewegung der Elemente relativ zum Träger kann durch hydraulische, mechanische oder pneumatische Antriebe erfolgen. Vorteilhaft ist hierbei die Ausgestaltung der Elemente aus einem elastischen Material, welches es ermöglicht den Träger mit den Elementen in einfacher Weise in das Filterelement ein zu bringen und welches eine das Filterelement schonende Anlage der Elemente an der Innenmantelfläche des Filterelements bereitstellt.

Das zuvor beschriebene Keilprinzip, wie auch alternative mechanische Ausgestaltungen kann beispielsweise auch über eine Keilverstellung mit einem Hebelsystem ausgeführt werden.

Gemäß einer weiteren Weiterbildung des Werkzeuges ist vorgesehen, dass die Steuereinrichtung mit einer Verlängerung verbindbar ist, die an die Spindel anschließbar ist. Durch diese Ausgestaltung kann das Werkzeug in seiner Länge relativ kompakt ausgebildet werden. Um das Werkzeug dennoch auch bei der Demontage von Filterelementen aus langen Rohrleitungen einsetzen zu können, ist die Verlängerung vorgesehen, die in Abhängigkeit der erforderlichen Länge des Werkzeugs auch mehrteilig ausgebildet und bausatzförmig zusammengesetzt werden kann.

Alternativ zu einer Spindel, insbesondere einer Gewindespindel können natürlich auch andere Verstelleinrichtungen vorgesehen sein. So kann beispielsweise eine Schub-/Zugstange vorgesehen sein, um beispielsweise die Spannelemente relativ zum Träger des Werkzeugs zu verstellen. Als Alternative zu einer Gewindespindel kann auch eine flexible Welle vorgesehen sein. Ebenfalls ist es möglich, die Verstellung des Werkzeugs im Filterelement über einen oder mehrere Seilzüge zu steuern. Eine weitere Ausgestaltung kann durch eine Form-Gedächtnislegierung gegeben sein, die über eine elektrische Ansteuerung die Verbindung zwischen dem Werkzeug und dem Filterelement bereitstellt.

In der Regel wird die Werkzeugsteuerung, das heißt die Verstellung des Werkzeugs manuell ausgeführt. Es sind aber auch Alternativen denkbar, wie beispielsweise ein elektromotorischer Antrieb, der beispielsweise über einen Akkumulator mit Energie versorgbar ist. Auch sind hydraulische bzw. pneumatische oder Kombinationen daraus denkbar. Ebenso kann ein Federspeicher vorgesehen sein, in dem die erforderliche Energie zur Verstellung des Werkzeugs gespeichert und bei Bedarf abgerufen wird.Nach einem weiteren Merkmal der Erfindung ist vorgesehen, dass der Grundkörper einen Anschlagring aufweist, der endseitig des Grundkörpers angeordnet und mit einer Außenkontur ausgebildet ist, die über die Außenkontur des Grundkörpers hervorsteht. Dieser Anschlagring dient dazu, dass das Werkzeug in der zutreffenden Anordnung auch dann in der zentrischen Öffnung des Filterelements angeordnet werden kann, wenn dies optisch für die handhabende Person nicht mehr ohne weiteres erkennbar ist. Durch den Anschlagring wird der handhabenden Person die zutreffende Lage bei einem ausreichend tief eingeschobenen Werkzeug haptisch angezeigt. Desweiteren wird hierdurch sichergestellt, dass die Spannelemente an den dafür vorgesehenen Positionen innerhalb des Filterelements anliegen. So kann vermieden werden, dass das Werkzeug zu weit in ein Filterelement eingeschoben wird, so dass die Spannelemente dann beispielsweise wirkungslos bleiben, wenn diese außerhalb des Filterelements von der ersten in die zweite Stellung überführt werden.

Vorzugsweise ist der Grundkörper an seinem freien Ende konisch ausgebildet, um das Einführen des Werkzeugs in die im Wesentlichen zentrische Öffnung des Filterelements zu vereinfachen. Dies ist insbesondere dann erforderlich, wenn das Filterelement sehr weit hinter der Zugangsöffnung der Rohrleitung angeordnet und daher nicht mehr ohne weiteres erkennbar ist. Auch diese Ausgestaltung dient dazu, Beschädigungen insbesondere im Stirnflächenbereich der Filterelemente zu vermeiden.

Desweiteren ist nach einer Weiterbildung der Erfindung vorgesehen, dass ein Zentrierungselement vorgesehen ist, das an den Grundkörper oder an die Verlängerung anschließbar ist. Ein solches Zentrierungselement kann als Scherenelement ausgebildet sein und Rollelemente aufweisen, die auf der Innenfläche der Rohrleitung abrollen und somit das Werkzeug beziehungsweise eine an das Werkzeug angeschlossene Verlängerung zentrisch in der Rohrleitung führen. Es können auch mehrere Zentrierungselemente in gleichmäßigen Abständen vorgesehen sein, wobei die Zentrierungselemente vorzugsweise mit dem Grundkörper oder der Verlängerung verbindbar und damit auch demontierbar sind.

Eine alternative Ausgestaltung eines Zentrierungselements kann beispielsweise ein Kunststoffflansch sein, der mit dem Werkzeug verbindbar ist, wobei der Kunststoffflansch einen Außendurchmesser aufweist, der im Wesentlichen mit dem Innendurchmesser der Rohrleitung übereinstimmt, in der die Filterelemente angeordnet sind. Der Kunststoffflansch kann in seiner Außenmantelfläche mit einer reibmindernden Beschichtung, beispielsweise Teflon ausgebildet sein, sodass nur eine geringe Reibung zwischen der Innenmantelfläche der Rohrleitung und dem Kunststoffflansch zu überwinden ist. Alternativ ist vorgesehen, dass der Kunststoffflansch stirnseitig an der Rohrleitung zentriert befestigbar ist und lediglich die Verlängerung des Werkzeugs bzw. das Werkzeug zentrierend führt. In jedem Fall weist der Kunststoffflansch eine zentrische Bohrung auf, die der Aufnahme der Werkzeugs bzw. der Verlängerung des Werkzeugs dient.

Der Kunststoffflansch kann auch ersetzt werden durch eine sogenannte Bürstenzentrierung. Eine solche Bürstenzentrierung besteht aus einem Tragkörper an dem mehrere Bürsten in radialer Richtung des Tragkörpers angeordnet sind. Die Bürsten bestehen jeweils aus mehreren Borsten, die eine bestimmte Steifigkeit haben, die es ermöglicht, den Tragkörper im wesentlichen zentriert in der Rohrleitung zu führen. Eine weitere Ausgestaltung kann durch eine Zentrierelement gegeben werden, das aus zwei im Abstand zueinander angeordnete, ringförmig ausgebildete Körper besteht, zwischen denen sich mehrere kreisbogenabschnittförmige Verbindungselemente erstrecken. Die Verbindungselemente sind ausreichend flexibel, wobei die ringförmigen Körper einen Außendurchmesser aufweisen, der geringer ist als der Innendurchmesser der Rohrleitung, während die Verbindungselemente in einer Ausgangsposition aufgrund ihrer kreisbogenabschnittförmigen Ausgestaltung eine bauchige Form des Zentrierelements bereitstellen, wobei der größte Durchmesser des Zentrierelements im Bereich zwischen den beiden ringförmigen Körpern ausgebildet ist. Über die Verbindungselemente werden die ringförmigen Körper in der Rohrleitung zentriert. Hierbei verlängert sich gegebenenfalls die Länge des Zentrierelements insoweit die Verbindungselemente an der in Mantelfläche der Rohrleitung zur Anlage gebracht und aufgrund des größeren Durchmessers aufeinander zu verformt werden.

Schließlich ist nach einem weiteren Merkmal der Erfindung vorgesehen, dass das Spannelement hydraulisch oder pneumatisch bewegbar ist.

Weitere Merkmale und Vorteile der Erfindung ergeben sich aus der nachfolgenden Beschreibung der zugehörigen Zeichnung. In der Zeichnung zeigen:
- Fig. 1: eine Rohrleitung mit Filterelementen und einem Werkzeug zur Demontage der Filterelemente in perspektivischer Ansicht;
- Fig. 2: die Rohrleitung gemäß Fig. 1 in einer geschnitten dargestellten Seitenansicht;
- Fig. 3: die Rohrleitung gemäß Fig. 1 und 2 in einer Seitenansicht entlang der Linie A-A in Fig. 2;
- Fig. 4: eine Detailansicht von zwei benachbart angeordneten Filterelemente in einer Rohrleitung in geschnitten dargestellter Seitenansicht;
- Fig. 5: eine Detailansicht des Werkzeugs gemäß Fig. 1 mit einer Rohrleitung und einem Filterelement in geschnitten dargestellter Seitenansicht;
- Fig. 6: das Werkzeug gemäß Fig. 5 in Explosionsdarstellung;
- Fig. 7: ein Zentrierungselement für das Werkzeug gemäß den Figuren 5 und 6 in Seitenansicht;
- Fig. 8: das Zentrierungselement gemäß Fig. 7 in einer Ansicht;
- Fig. 9: das Zentrierungselement gemäß den Figuren 7 und 8 in perspektivischer Ansicht;
- Fig. 10: eine Verlängerung für das Werkzeug in Seitenansicht;
- Fig. 11: die Verlängerung gemäß Fig. 10 in Schnittansicht entlang der Schnittlinie B-B in Fig. 10;
- Fig. 12: ein Kupplungselement zur Verbindung des Werkzeugs mit der Verlängerung beziehungsweise mehrerer Elemente der Verlängerung untereinander in geschnitten dargestellter Seitenansicht und
- Fig. 13: das Verlängerungselement gemäß Fig. 12 in Ansicht.

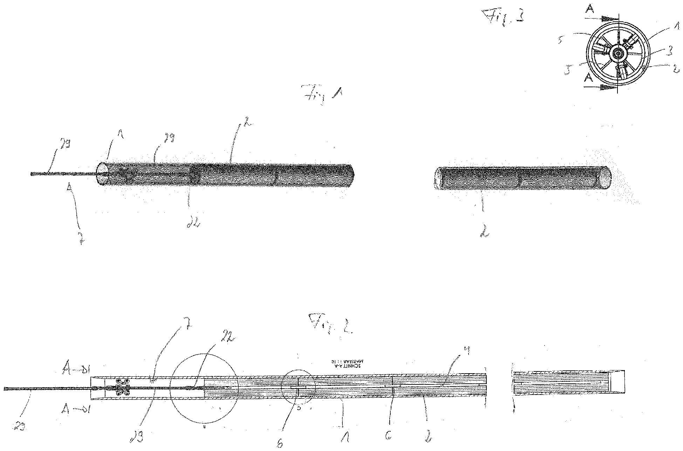

Die Figuren 1 bis 3 zeigen eine Rohrleitung 1 in der eine Mehrzahl von Filterelementen 2 in Achsrichtung hintereinander angeordnet sind. Die Rohrleitung 1 ist hohlzylindrisch ausgebildet. Die Filterelemente 2 bestehen aus zwei beabstandet zueinander angeordneten Ringelementen 3, zwischen denen ein Filterkörper 8, beispielsweise aus einem Vlies angeordnet ist. Desweiteren weist jedes Filterelement 2 eine zentrische Öffnung 4 auf, die sich durch das gesamte Filterelement 2 erstreckt und in einem nicht näher dargestellten Ringelement endet, welches über radial verlaufende Stege 5 mit dem Ringelement 3 verbunden ist. Der Außendurchmesser des Ringelements 3 entspricht im Wesentlichen dem Innendurchmesser der Rohrleitung 1, wobei auch der Filterkörper 8 einen Durchmesser aufweist, der in etwa dem Innendurchmesser der Rohrleitung 1 entspricht. Benachbarte Filterelemente 2 sind über hohlzylindrische Steckelemente 6 verbunden.

Eine Rohrleitung 1 gemäß den Figuren 1 bis 3 dient beispielsweise dazu, ein verunreinigtes Medium, beispielsweise Wasser osmotisch zu filtern, indem das Medium über die Außenmantelfläche der Filterelemente 2 durch den Filterkörper 8 fließt und über die zentrische Öffnung 4 der Filterelemente 2 aus der Rohrleitung 1 abfließt. Die Verunreinigungen werden hierbei in einem Osmoseverfahren mittels des Filterkörpers 8 gereinigt.

Im Zuge dieses Reinigungsverfahrens erreichen die Filterelemente 2 einen Zustand der Sättigung mit den Verunreinigungen und müssen ausgetauscht werden. Hierbei kann es erforderlich sein, dass eine große Anzahl von Filterelementen 2 in einer Rohrleitung 1 und darüber hinaus eine noch größere Anzahl von Filterelementen 2 in mehreren parallel zueinander verlaufenden Rohrleitungen 1 ausgewechselt werden müssen. Die Rohrleitungen 1 weisen eine Länge auf, die es nicht ermöglicht, sämtliche Filterelemente 2 händisch zu greifen, um diese aus der Rohrleitung 1 herauszuziehen oder herauszudrücken. Es ist daher ein Werkzeug 7 vorgesehen, wie es nachfolgend noch beschrieben wird und welches der Verbindung mit einem in der Rohrleitung 1 angeordneten Filterelemente 2 dient.

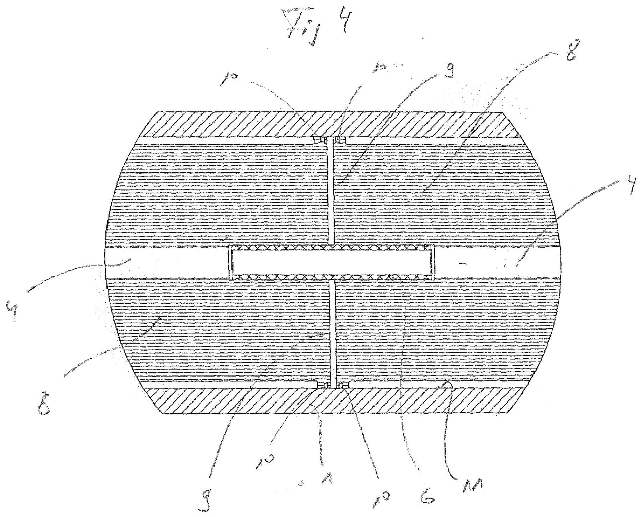

In Fig. 4 ist ergänzend der Filterkörper 8 dargestellt, der aus einzelnen Lagen eines Vlieses besteht. Desweiteren ist in Fig. 4 zu erkennen, dass die einander zugewandten Filterelemente 2 über ein Steckelement 6 miteinander verbunden sind und dass ergänzend die beiden einander gegenüberliegenden Stirnflächen 9 eines jeden Filterelements 2 einen Durchmesser aufweisen, der geringfügig größer ist als der Durchmesser des Filterkörpers 8, so dass die Filterelemente 2 in diesem Bereich mit einem Dichtelemente 10 ausgebildet ist, welches dichtend an einer Innenmantelfläche 11 der Rohrleitung 1 dichtend anliegt.

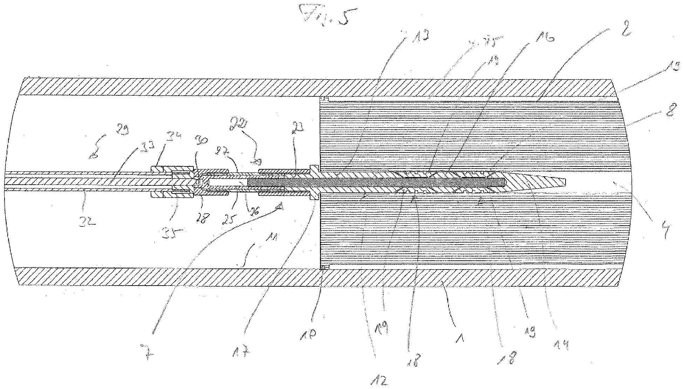

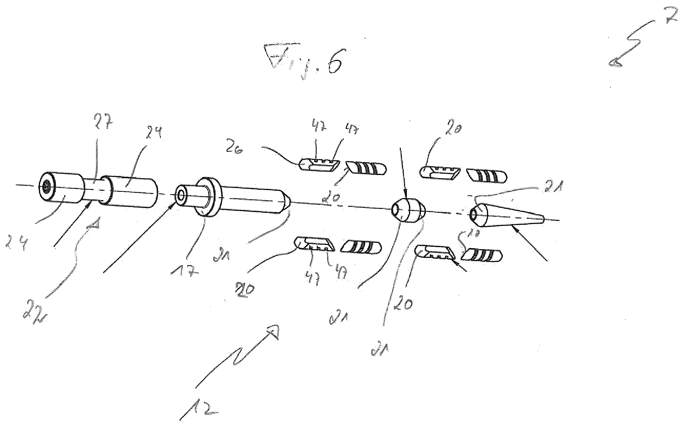

In Fig. 5 ist das Werkzeug detailliert dargestellt und wird nachfolgend auch in Bezug auf Fig. 6 näher beschrieben. Das Werkzeug 7 zur Demontage des Filterelements 2 aus der Rohrleitung 1 besteht aus einem Grundkörper 12, der aus zwei relativ zueinander bewegbaren Abschnitten 13, 14 besteht, die auf einer Spindel 15 angeordnet sind, wobei der Grundkörper 12 einen weiteren, mittleren, ebenfalls auf der Spindel 15 angeordneten Körper 16 aufweist, der über die Spindel 15 in Richtung auf den Abschnitt 13 zubewegt werden kann. In gleicher Weise kann der Abschnitt 14 über die Spindel 15 in Richtung auf den mittleren Körper 16 zubewegt werden.

Der Abschnitt 14 ist konisch ausgebildet, so dass sich sein Durchmesser zu seinem freien Ende hin verringert.

Desweiteren weist der Abschnitt 13 endseitig einen Anschlagring 17 auf, dessen Durchmesser größer ist als der Durchmesser des Grundkörpers 12, der im Wesentlichen einen Außendurchmesser aufweist, der mit dem Innendurchmesser der zentrischen Öffnung 4 des Filterelements 2 übereinstimmt.

Zwischen dem Abschnitt 14 und dem Abschnitt 13 des Grundkörpers 12 sind zwei Spannelemente 18 aus jeweils zwei Spannbacken 19 angeordnet, die im Querschnitt trapezförmig ausgebildet sind und somit Schrägflächen 20 aufweisen, die mit korrespondierend ausgebildeten Schrägflächen 21 an den Abschnitten 13, 14 und dem Körper 16 anliegen. In der in Fig. 5 dargestellten ersten Position sind die Außenflächen der Spannbacken 19 fluchtend zum Außendurchmesser der Abschnitte 13, 14 und des Körpers 16 des Grundkörpers 12 ausgerichtet. Durch eine Spindelbewegung der Spindel 15 wird sowohl der Körper 16 als auch der Abschnitt 14 in Richtung auf den Abschnitt 13 des Grundkörpers 12 bewegt. Hierbei gleiten die Schrägflächen 20, 21 derart aufeinander, dass die Spannbacken 19 der Spannelemente 18 aufgrund des verkürzten Abstands zwischen den Abschnitten 13, 14 und dem Körper 16 nach außen verdrängt und gegen die Innenmantelfläche der zentrischen Öffnung 4 gepresst werden, so dass eine reibschlüssige Verbindung zwischen der Innenmantelfläche der zentrischen Öffnung 4 und den Außenflächen der Spannbacken 19 der Spannelemente 18 erzeugt wird, die es ermöglicht, das Filterelement 2 mittels des Werkzeugs 7 aus der Rohrleitung 1 herauszuziehen. Hierbei ist demzufolge die Reibkraft zwischen den Spannbacken 19 der Spannelemente 18 und der Innenmantelfläche des Filterelements 2 derart auszuwählen, dass diese größer ist, als die Reibkraft zwischen der Außenmantelfläche des Filterelements 2 und der Innenmantelfläche der Rohrleitung 1, insbesondere im Bereich der Dichtelemente 10. Gleichzeitig muss sichergestellt werden, dass auch das Steckelement 6 bei einer ziehenden Bewegung des Werkzeugs 7 aus dem benachbarten Filterelement 2 herausgezogen wird, so dass in einem nachfolgenden Arbeitsschritt die zentrische Öffnung 4 des benachbarten Filterelements für das Werkzeug 7 zugänglich ist.

Der Anschlagring 17 stellt hierbei sicher, dass das Werkzeug 7 auch dann spürbar zutreffend in ausreichender Tiefe in der zentrischen Öffnung 4 des Filterelements 2 angeordnet ist, wenn das Filterelement 2 für die ausführende Person nicht unbedingt visuell erkennbar ist.

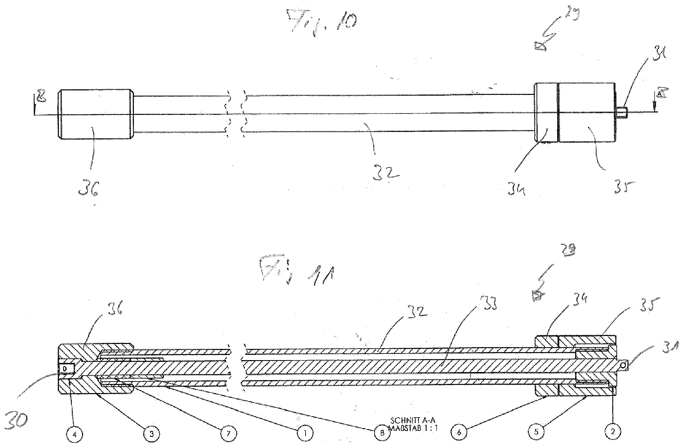

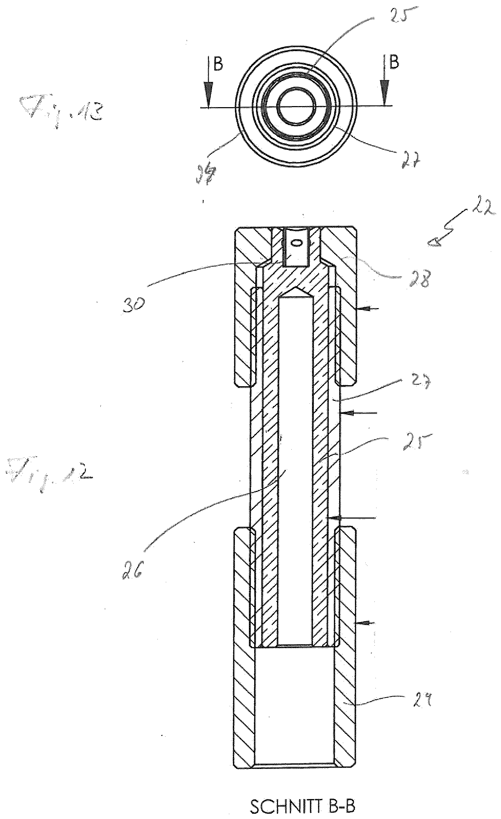

Das Werkzeug 7 gemäß den Figuren 5 und 6 weist ergänzend das Kupplungselement 22 auf, welches detaillierte in den Figuren 12 und 13 dargestellt ist. Das Kupplungselement 22 besteht aus einem, ein freies Ende 23 des Abschnitts 13 übergreifendes Gewinderohr 24, und einem darin drehbeweglich geführten Gewindeeinsatz 25, der eine Gewindebohrung 26 zur Kopplung mit der Spindel 15 aufweist. Desweiteren ist ein weiteres Gewinderohr 27 vorgesehen, welches den Gewindeeinsatz 25 umgibt und mit einem Ende an dem Gewinderohr 24 und mit einem zweiten Ende an einer Gewindebuchse 28 ausgebildet ist. Der Gewindeeinsatz 25 schließt bündig mit der Gewindebuchse 28 ab und hat in seinem zentralen Bereich einen Werkzeugansatz, beispielsweise eine im Querschnitt quadratisch ausgebildete Öffnung zur Aufnahme 30 eines korrespondierend angeordneten Einsatzes, beispielsweise einer Verlängerung 29, wie sie in den Figuren 10 und 11 dargestellt und nachfolgend noch beschrieben werden wird. Die Verlängerung 29 kann beispielsweise aus Metall Elementen, wie Edelstahlrohren bestehen. Es ist aber auch eine Kombination aus einer Schubstange und einem Zugseil denkbar. Ebenfalls können Kunststoffrohre oder Kunststoffprofile Verwendung als Verlängerung 29 finden. Bevorzugt hat sich hierbei ein Glasfaserkunststoffprofil bzw. ein Basaltfaserrohr als geeignet erwiesen.

Das Kupplungselement 22 wird derart auf das freie Ende 23 des Grundkörpers 12 aufgesetzt, dass die Spindel 15 mit dem Gewindeeinsatz 25 verschraubt ist, so dass die Spindel 15 über den Gewindeeinsatz 25 in beide Richtungen verdreht werden kann, um einerseits die Spannbacken 19 von der in Fig. 5 dargestellten ersten Position in eine zweite Position zu verfahren, in der die Spannbacken 19 aus der Oberfläche des Grundkörpers 12 herausgehoben sind. Hierbei schließt sich das Gewinderohr 24 bündig an der Außenfläche des Anschlagringes 17 an. In die Aufnahme 30 am gegenüberliegenden stirnseitigen Ende des Kupplungselementes 22 ist ein im Querschnitt quadratischer Vorsprung 31 der Verlängerung 29 formschlüssig einsetzbar.

Die Verlängerung 29 besteht aus einem Außenrohr 32 und einem darin drehbar angeordneten Stab 33, der an seinen beiden Enden korrespondierend ausgebildete Anschlusselemente, nämlich zum einen den Vorsprung 31 und zum anderen eine korrespondierende Aufnahme 30 aufweist. Das Außenrohr 32 ist endseitig im Bereich des Vorsprungs 31 mit einem auf dem Außenrohr 32 angeordneten Stellring 34 und einer Überwurfmutter 35 ausgebildet, während das Außenrohr 32 am gegenüberliegenden Ende eine Buchse 36 mit einem Absatz aufweist. In der Buchse 36 ist die Aufnahme 30 angeordnet, in die wiederum der Vorsprung 31 einer weiteren Verlängerung 29 oder aber auch ein Werkzeug, wie beispielsweise eine Knarre einsetzbar ist. Zu diesem Zweck ist der Stab 33 relativ zum Außenrohr 32 verdrehbar gelagert.

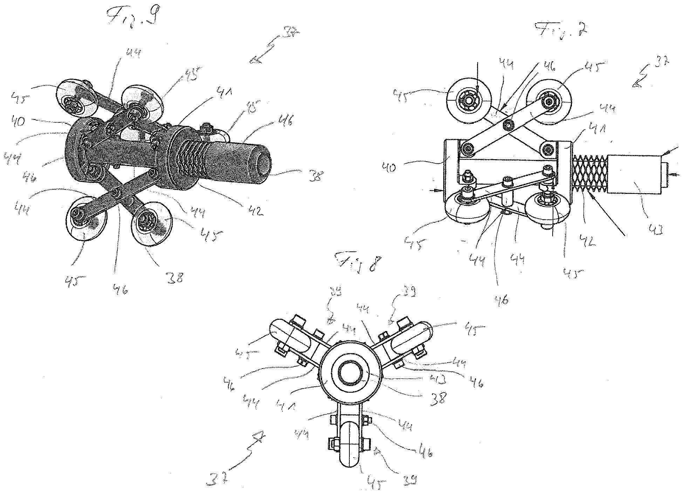

Bei sehr großen Längen des Werkzeuges 7, beispielsweise durch Verwendung von mehreren Verlängerungen 29 kann eine in den Figuren 7 bis 9 dargestelltes Zentrierungsmittel 37 am Werkzeug 7 befestigt werden. Das Zentrierungsmittel 37 besteht aus einem zentralen Rohr 38, welches der Aufnahme einer Verlängerung 29 dient und welches in gleichmäßigen äquidistalen Abständen Führungselemente 39 aufweist. Das Rohr 38 weist einen Flansch 40 auf, desweiteren weist das Rohr 38 ein in Achsrichtung relativ zum Flansch 40 verschiebbares Führungselement 41 auf, welches sich an einer gewellten Federscheibe 42 abstützt, die wiederum an einer Gewindebuchse 43 abgestützt ist, wobei das Führungselement 41 und auch die Gewindebuchse 43 das Rohr 38 umgeben und relativ zu dessen Längsachsenrichtung verschiebbar sind.

Im Bereich aufeinander zugerichteter Kragenflächen des Flansches 40 und des Führungselementes 41 sind schwenkbeweglich Hebelarme 44 angeordnet, an deren freien Enden Rollkörper 45 drehbar gelagert sind. Hierbei kann es sich um gummibereifte Felgen handeln.

Jeweils zwei Hebelarme 44 sind jeweils über eine Achse 46 miteinander verbunden, wobei die Achse 46 in Verbindung mit dem Flansch 40 und dem Führungselement 41 eine scherenartige Bewegung der Hebelarme 44 ermöglicht. Durch ein Verstellen der Gewindebüchse 43 werden somit die Rollkörper 45 in einen vorbestimmten Abstand zum Rohr 38 verstellt, wobei eine Einstellung gewählt wird, in der die Rollkörper 45 an der Innenwandungsfläche der Rohrleitung 1 abrollen und somit das Zentrierungsmittel 37 im zentrischen Bereich der Rohrleitung 1 führen. Eventuelle Unebenheiten im Bereich der Innenmantelfläche der Rohrleitung 1 können hierbei über die Federscheibe 24 ausgeglichen werden.

Mit dem voranstehend beschriebenen Werkzeug 7 ist eine materialschonende Demontage von Filterelementen 2 aus einer Rohrleitung 1 möglich. Hierzu wird der Grundkörper 12 bei in der ersten Stellung gemäß Fig. 5 positionierten Spannbacken 19 in die zentrische Öffnung 4 des Filterelements 2 eingeschoben, bis der Anschlagring 17 an der Stirnfläche des zu demontierenden Filterelements 2 anliegt. Über das Kupplungselement 22 und eine daran angeschlossene Verlängerung 29 werden sodann die Abschnitte 13, 14 und der Körper 16 des Grundkörpers 12 aufeinander zu gespindelt, so dass die Spannbacken 19 aus der Oberfläche des Grundkörpers 12 herausgeschoben und in Anlage mit der Innenmantelfläche der zentrischen Öffnung 4 des Filterelements 2 gebracht werden. Anschließend kann das Filterelement 2 in Achsrichtung der Rohrleitung 1 aus dieser Rohrleitung 1 herausgezogen werden, wobei das Steckelement 6 aus dem benachbarten Filterelement 2 herausgerissen wird. Sowohl die Bewegung des Werkzeugs 7 in Richtung auf das zu demontierende Filterelement 2 in der Rohrleitung 1, als auch das Herausziehen des Filterelements 2 aus der Rohrleitung 1 werden hierbei durch das Zentrierungsmittel 37 unterstützt, welches am Außenrohr 32 der Verlängerung 29 angeordnet ist und mit den Rollkörpern 45 an der Innenmantelfläche der Rohrleitung 1 abrollt.

In der Regel ist eine manuelle Einführung des Werkzeugs 7 möglich. Gleiches gilt hinsichtlich der Entnahme des Werkzeuges 7 mit dem daran angeordnet denn Filterelement 2. Denkbar sind natürlich auch Auszugshilfen, wie beispielsweise ein Flaschenzug oder auch hydraulische, pneumatische oder elektromotorische Antriebe.Neben der voranstehend beschriebenen Ausführungsform eines Werkzeugs 7 sind auch weitere Abwandlungen möglich. So ist es nicht zwingend erforderlich, dass die Spannbacken 19 der Spannelemente 18 über eine Spindel 15 und die damit verbundene Relativbewegung der Abschnitte 13, 14 und des Körpers 16 in Richtung der Spindel 15 und aufeinander zu erfolgt. Vielmehr ist auch eine Ausführungsform denkbar, bei der die Spannbacken 19 der Spannelemente 18 hydraulisch oder pneumatisch verstellbar sind. Hier kann beispielsweise vorgesehen sein, dass innerhalb des Grundkörpers 12 anstelle der Spindel 15 Linearmotoren vorgesehen sind, die pneumatisch oder hydraulisch angetrieben werden und dass über eine Druckbeaufschlagung der Linearmotoren die Spannbacken 19 ausgeschoben werden.

Die Rückstellung kann sowohl bei dieser Ausgestaltung als auch bei der voranstehend beschriebenen Ausgestaltung mit der Spindel 15 über nicht näher dargestellte Federelemente erfolgen, beispielsweise Gummiringe, die in Ringnuten 47 der Spannbacken 19 angeordnet sind, wobei in dem Ausführungsbeispiel nach den Figuren 5 und 6 jede Spannbacke 19 drei parallel verlaufende Ringnuten aufweist, die der Aufnahme nicht näher dargestellter Gummiringe dienen. Beim Verschieben der Spannbacken 19 aus der in Fig. 5 dargestellten ersten Position in eine nicht näher dargestellte zweite Position, bei der die Spannbacken 19 reibschlüssig an der Innenwandungsfläche der zentrischen Öffnung 4 des Filterelements 2 anliegen, werden diese Gummiringe gespannt, so dass bei einem Zurückspindeln und damit einer Zurückführung der Spannbacken 19 in die in Fig. 5 dargestellte erste Position die Rückstellung der Spannbacken 19 von den Gummiringen unterstützt wird.

**Bezugszeichen**

| | | | |
|---|---|---|---|
| 1 | Rohrleitung | 30 | Aufnahme |
| 2 | Filterelement | 31 | Vorsprung |
| 3 | Ringelement | 32 | Außenrohr |
| 4 | zentrische Öffnung | 33 | Steg |
| 5 | Steg | 34 | Stellring |
| 6 | Steckelement | 35 | Überwurfmutter |
| 7 | Werkzeug | 36 | Buchse |
| 8 | Filterkörper | 37 | Zentrierungsmittel |
| 9 | Stirnfläche | 38 | Rohr |
| 10 | Dichtelement | 39 | Führungselement |
| 11 | Innenmantelfläche | 40 | Flansch |
| 12 | Grundkörper | 41 | Führungselement |
| 13 | Abschnitt | 42 | Federscheibe |
| 14 | Abschnitt | 43 | Gewindebuchse |
| 15 | Spindel | 44 | Hebelarme |
| 16 | Körper | 45 | Rollkörper |
| 17 | Anschlagring | 46 | Achse |
| 18 | Spannelement | 47 | Ringnut |
| 19 | Spannbacken | | |
| 20 | Schrägfläche | | |
| 21 | Schrägfläche | | |
| 22 | Kupplungselement | | |
| 23 | Ende | | |
| 24 | Gewinderohr | | |
| 25 | Gewindeeinsatz | | |
| 26 | Gewindebohrung | | |
| 27 | Gewinderohr | | |
| 28 | Gewindebuchse | | |
| 29 | Verlängerung | | |

## Patentansprüche

1. Verfahren zur Demontage eines Filterelements aus einer Rohrleitung, wobei das Filterelement eine im Wesentlichen zentrische Öffnung und eine Außenkontur hat, die im Wesentlichen mit einer Innenkontur der Rohrleitung übereinstimmt, bei dem ein Werkzeug in die in Längsachsenrichtung des Filterelements verlaufende, im Wesentlichen zentrische Öffnung des Filterelements eingeschoben wird, das Werkzeug anschließend in zumindest einem Teilbereich seiner Umfangsfläche in einer Erstreckung im Wesentlichen rechtwinklig zur Längsachsenrichtung des Filterelements vergrößert und kraft- und/oder formschlüssig mit einer Innenmantelfläche der im Wesentlichen zentrischen Öffnung des Filterelements verbunden wird und bei dem das Filterelement abschließend mit dem Werkzeug in Längsachsenrichtung verschoben wird, bis das Filterelement aus der Rohrleitung hervorsteht und aus der Rohrleitung entnommen wird.

2. Verfahren nach Anspruch 1, **dadurch gekennzeichnet, dass** das Werkzeug über zumindest zwei Spannelemente mit der Innenmantelfläche des Filterelements verbunden wird, wobei die Spannelemente mechanisch, hydraulisch und/oder pneumatisch aus einer ersten Stellung in eine zweite, die Erstreckung des Werkzeugs rechtwinklig zur Längsachsenrichtung des Filterelements vergrößernden Stellung überführt werden.

3. Verfahren nach Anspruch 2, **dadurch gekennzeichnet, dass** die Spannelemente mit ersten Enden schwenkbar an einem Grundkörper des Werkzeugs angelenkt sind und dass zweite Enden der Spannelemente vom Grundkörper weg bewegt werden.

4. Verfahren nach einem der Ansprüche 1 bis 3, **dadurch gekennzeichnet, dass** die Vergrößerung der Erstreckung des Werkzeugs im Wesentlichen rechtwinklig zur Längsachsenrichtung des Filterelements gegen ein Federelement des Werkzeugs ausgeführt wird.

5. Werkzeug zur Demontage eines Filterelements aus einer Rohrleitung, wobei das Filterelement eine insbesondere zentrische Öffnung und eine Außenkontur aufweist, die im Wesentlichen mit einer Innenkontur der Rohrleitung übereinstimmt, insbesondere zur Durchführung des Verfahrens nach einem der Ansprüche 1 bis 4, bestehend aus einem Grundkörper, zumindest einem Spannelement, das im Grundkörper relativ zu diesem bewegbar angeordnet und zwischen zwei Stellungen verstellbar ist, wobei das Spannelement zumindest in der zweiten Stellung die Erstreckung des Grundkörpers rechtwinklig zu seiner Längsachse vergrößert, und einer Steuereinrichtung für die Verstellung des Spannelements in die zweite Stellung.

6. Werkzeug nach Anspruch 5, **dadurch gekennzeichnet, dass** der Grundkörper eine Spindel und zumindest zwei in Axialrichtung der Spindel relativ zueinander bewegbare Schubelemente als Steuereinrichtung und zumindest ein zwischen den Schubelementen angeordnetes Spannelement aufweist, welches bei einer Bewegung der Schubelemente aufeinander zu radial nach außen des Grundkörpers verdrängt wird.

7. Werkzeug nach Anspruch 5 oder 6, **dadurch gekennzeichnet, dass** das Spannelement aus zwei diametral gegenüberliegend am Grundkörper angeordneten Spannbacken oder drei oder vier Spannbacken besteht, die in gleichmäßigen Abständen zueinander am Grundkörper angeordnet sind.

8. Werkzeug nach einem der Ansprüche 5 bis 7, **dadurch gekennzeichnet, dass** zwei oder mehr Spannelemente in Axialrichtung des Grundkörpers hintereinander angeordnet sind und gemeinsam und gleichgerichtet über die Steuereinrichtung verstellbar sind.

9. Werkzeug nach einem der Ansprüche 5 bis 8, **dadurch gekennzeichnet, dass** die Spannelemente über federelastische Halteelemente an dem Grundkörper befestigt sind.

10. Werkzeug nach einem der Ansprüche 5 bis 9, **dadurch gekennzeichnet, dass** die Steuereinrichtung mit einer Verlängerung verbindbar ist, die an die Spindel anschließbar ist.

11. Werkzeug nach einem der Ansprüche 5 bis 10, **dadurch gekennzeichnet, dass** der Grundkörper einen Anschlagring aufweist, der endseitig des Grundkörpers angeordnet und mit einer Außenkontur ausgebildet ist, die über die Außenkontur des Grundkörpers hervorsteht.

12. Werkzeug nach einem der Ansprüche 5 bis 11, **dadurch gekennzeichnet, dass** der Grundkörper an seinem freien Ende konisch ausgebildet ist.

13. Werkzeug nach einem der Ansprüche 5 bis 12, **dadurch gekennzeichnet, dass** ein Zentrierungselement vorgesehen ist, dass an den Grundkörper oder an die Verlängerung anschließbar ist.

14. Werkzeug nach einem der Ansprüche 5 bis 13, **dadurch gekennzeichnet, dass** das Spannelement hydraulisch oder pneumatisch bewegbar ist.
